# FASCICULE DE BREVET EUROPEEN

(11) **EP 1 449 359 B1**
(45) Date de publication et mention de la délivrance du brevet: **13.04.2005**
(21) Numéro de dépôt: 02802320.8
(22) Date de dépôt: 17.10.2002
(51) Int. Cl.: H04N 5/44

(54) **DISPOSITIF DE RECEPTION DE SIGNAUX VIDEO ET PROCEDE DE COMMANDE D'UN TEL DISPOSITIF**
EINRICHTUNG ZUM EMPFANGEN VON VIDEOSIGNALEN UND VERFAHREN ZUR STEUERUNG EINER SOLCHEN EINRICHTUNG
DEVICE FOR RECEIVING VIDEO SIGNALS AND A METHOD OF CONTROLLING ONE SUCH DEVICE

(30) Priorité: 30.10.2001 FR 0114252
(43) Date de publication de la demande: 25.08.2004
(73) Titulaire: Thomson Licensing S.A., 92100 Boulogne-Billancourt (FR)
(72) Inventeur: GARANDEAU, Philippe, F-78970 Mezieres (FR)
(74) Mandataire: Rossmanith, Manfred, Dr.
(86) Numéro de dépôt international: PCT/FR2002/003560
(87) Numéro de publication internationale: WO 2003/039139

(56) Documents cités:
- WO-A-00/16544
- WO-A-99/16247
- US-A- 5 933 192
- PATENT ABSTRACTS OF JAPAN vol. 1999, no. 04, 30 avril 1999 (1999-04-30) & JP 11 027102 A (SAMSUNG ELECTRON CO LTD), 29 janvier 1999 (1999-01-29) & US 6 334 217 A (KIM) 25 décembre 2001 (2001-12-25)
- PATENT ABSTRACTS OF JAPAN vol. 1999, no. 02, 26 février 1999 (1999-02-26) & JP 10 294930 A (YAMAHA CORP), 4 novembre 1998 (1998-11-04)

## Description

La présente invention concerne un dispositif de réception de signaux vidéo et un procédé de commande d'un tel dispositif.

Pour assurer leur transport, que ce soit dans l'air ou par câble, les signaux vidéo sont en général modulés par une porteuse à une fréquence donnée qui dépend du programme concerné. Le signal vidéo est ensuite ramené en bande de base par un ensemble syntoniseur - démodulateur, également dénommé *front end*. Différents traitements peuvent ensuite être effectués sur les signaux reçus par des circuits supplémentaires en fonction du type de signal utilisé.

Lors du passage d'un programme à un autre (*zapping*) à la demande de l'utilisateur, le syntoniseur s'aligne sur une nouvelle fréquence de porteuse ce qui entraîne la réception d'un nouveau signal et son traitement éventuel par les circuits supplémentaires. Dans la pratique, ces opérations ne sont pas instantanées et un laps de temps notable peut s'écouler entre la commande de l'utilisateur et la visualisation du nouveau programme.

Si aucune mesure particulière n'est prise, l'écran de visualisation n'affiche rien ("écran noir") pendant ce laps de temps, ce qui est bien sûr préjudiciable au confort visuel de l'utilisateur.

Des solutions ont déjà été proposées pour tenter de remédier à cet inconvénient.

Dans les demandes de brevet EP 0 306 704 et JP 2000 032 338, on propose d'afficher lors du changement de programme une image fixe issue du programme initial jusqu'à ce que le nouveau programme puisse être affiché. Dans la demande de brevet EP 0 712 242, on propose d'afficher une image fixe prédéterminée.

Dans la demande de brevet WO 99/16 247, on mémorise des images de type I (images à codage intra) contenues dans des flux de type MPEG correspondant à plusieurs programmes ; lors d'un changement de programme, si le nouveau programme est un programme pour lequel une image de type I est mémorisée, cette image (fixe) est affichée.

Ces solutions n'améliorent que peu le confort visuel pour l'utilisateur : certes elles remplacent l'écran noir par une image fixe, mais elles n'améliorent en rien la fluidité de l'affichage.

L'invention propose une nouvelle solution pour améliorer le confort visuel de l'utilisateur lors d'un changement de programme : un dispositif de réception de signaux vidéo comprend une première chaîne de décodage, une seconde chaîne de décodage, un encodeur vidéo un moyen de sélection pour connecter sélectivement la première chaîne de décodage ou la deuxième chaîne de décodage à l'encodeur vidéo, un moyen de détection de l'état d'au moins une des première et seconde chaînes de décodage générant une information d'état et un moyen de commande du moyen de sélection en fonction de l'information d'état.

Selon d'autres caractéristiques avantageuses,
- le dispositif comprend une interface utilisateur apte à transmettre une information de programme au moyen de commande ;
- la première et la seconde chaîne de décodage sont aptes à générer chacune un flux vidéo numérique ;
- la première et la seconde chaîne de décodage comprennent chacune un décodeur vidéo ;
- au moins une des première et seconde chaînes de décodage comporte un désembrouilleur.

L'invention propose également un procédé de commande d'un tel dispositif qui comprend les étapes suivantes :
- commande du moyen de sélection pour connexion de la première chaîne de décodage à l'encodeur vidéo ;
- réception d'un signal comportant une information de programme ;
- commande de la seconde chaîne de décodage pour réception du programme désigné par l'information de programme ;
- maintien de la commande du moyen de sélection pour connexion de la première chaîne de décodage à l'encodeur vidéo tant que la seconde chaîne de décodage ne génère aucun flux vidéo ;
- commande du moyen de sélection pour connexion de la seconde chaîne de décodage à l'encodeur vidéo lorsque la seconde chaîne de décodage génère un flux vidéo.

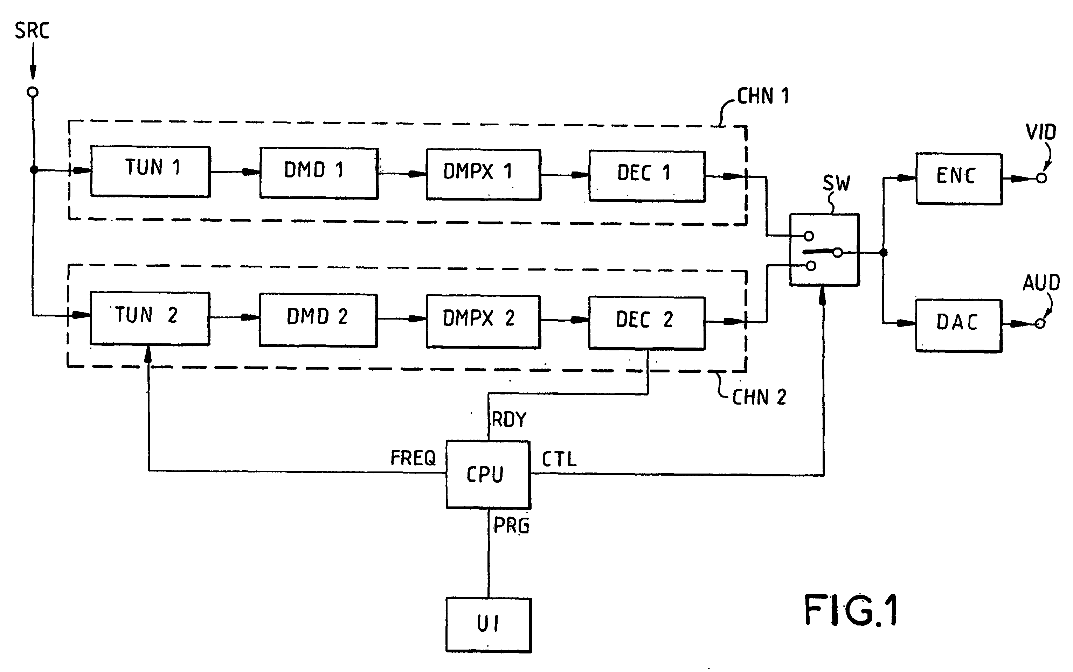

La description d'un exemple de réalisation de l'invention sera faite en référence à la figure 1 qui représente les éléments essentiels d'un décodeur numérique.

Un décodeur numérique est un dispositif de réception de signaux vidéo codés (en général selon la norme MPEG), multiplexés et modulés par une porteuse pour leur transport par câble ou dans l'air (communication satellite ou hertzienne).

Le décodeur numérique dont les éléments principaux sont représentés en figure 1 comporte deux chaînes de décodage CHN1, CHN2.

Chaque chaîne de décodage CHN1, CHN2 est connectée en entrée à une source commune SRC de signaux vidéo, par exemple une antenne ou un câble d'un réseau local.

Chaque chaîne de décodage CHN1, CHN2 comporte un syntoniseur TUN1, TUN2, un démodulateur DMD1, DMD2, un démultiplexeur DMPX1, DMPX2 et un décodeur audio/vidéo DEC1, DEC2 placés en série.

Chaque chaîne de décodage CHN1, CHN2 génère ainsi, à partir des signaux vidéo émis par la source commune SRC, un flux numérique audio/vidéo correspondant au programme associé à la fréquence de syntonisation du syntoniseur TUN1, TUN2. Le flux numérique est par exemple du type 4:2:2 selon la norme CCIR 601.

La sortie de chaque chaîne de décodage CHN1, CHN2 est connectée à une entrée d'un commutateur SW dont la sortie est connectée aux entrées respectives d'une encodeur vidéo ENC et d'un convertisseur numérique-analogique audio DAC.

Le commutateur SW permet de sélectivement connecter la sortie de la première chaîne de décodage CHN1 ou la sortie de la seconde chaîne de décodage CHN2 au convertisseur audio DAC et à l'encodeur vidéo ENC. Le commutateur SW est commandé par un microprocesseur CPU comme expliqué plus loin.

L'encodeur vidéo ENC convertit le flux numérique qu'il reçoit de la première chaîne de décodage CHN1 ou de la seconde chaîne de décodage CHN2 en un signal vidéo analogique. Le signal vidéo analogique est par exemple un signal vidéo composite (*CVBS* selon le sigle anglo-saxon) ou un signal à trois composantes de couleur RVB (*RGB*). Ce signal vidéo analogique est mis à disposition de l'utilisateur sur un connecteur VID (par exemple une/des broche(s) d'une prise Péritel) afin d'être visualisé sur un dispositif d'affichage classique, par exemple un téléviseur.

De manière similaire, le convertisseur audio DAC convertit le flux numérique audio en un signal audio analogique vers un connecteur de sortie AUD, par exemple les broches 1 et 3 d'une prise Péritel.

Le microprocesseur (ici unité centrale) CPU est connecté aux différents éléments du décodeur numérique pour échange d'informations et de commandes avec ceux-ci. Toutefois, pour la clarté de l'exposé, seul les connexions nécessaires à l'explication de l'invention apparaissent sur la figure 1.

Notamment, pour toute connexion entre le microprocesseur CPU et un élément de la seconde chaîne de décodage CHN2, il existe également une connexion correspondante non représentée entre le microprocesseur CPU et l'élément équivalent dans la première chaîne de décodage CHN1.

Le microprocesseur CPU commande le commutateur SW par une ligne de commande CTL. Le microprocesseur CPU envoie aussi une information de fréquence FREQ au syntoniseur TUN2 de la seconde chaîne de décodage CHN2. Cette information de fréquence FREQ est en général un nombre entier traduit en fréquence à recevoir par le syntoniseur TUN2.

Le microprocesseur CPU dialogue aussi avec une interface utilisateur UI de laquelle il reçoit notamment une information de programme PRG. L'interface utilisateur UI comprend en général un récepteur infrarouge qui reçoit des signaux infrarouge d'une télécommande et les traduit en une information de programme PROG compréhensible par le microprocesseur CPU. L'information de programme PROG indique le programme (c'est-à-dire le canal ou la chaîne) que l'utilisateur souhaite recevoir.

Le microprocesseur CPU est également connecté au décodeur audio/vidéo DEC2 de la deuxième chaîne de décodage CHN2 qui lui envoie notamment une information d'état RDY qui indique si le décodeur audio/vidéo DEC2 est prêt ou non, c'est-à-dire s'il décompresse sans erreur et émet un flux numérique valide ou non. Cette information d'état RDY est par exemple un état logiciel du pilote (ou *driver*) qui gère le décodeur audio/vidéo DEC2.

Une phase de changement de programme comme proposée par l'invention va à présent être décrite.

On suppose pour l'explication que le commutateur SW relie la première chaîne de décodage CHN1 (plus précisément son décodeur audio/vidéo DEC1) au convertisseur audio DAC et à l'encodeur vidéo ENC. Le décodeur numérique génère donc sur ses sorties vidéo VID et audio AUD des signaux analogiques d'un programme correspondant à la fréquence reçue par le syntoniseur TUN1.

La phase de changement de programme (*zapping*) est initiée par la réception d'une information de programme PRG par le microprocesseur. Dans l'exemple décrit ici, l'information de programme PRG provient d'une interface utilisateur UI (par exemple, à l'origine, d'une télécommande manipulée par l'utilisateur). L'invention n'est toutefois pas limitée à cet exemple : l'information de programme PRG pourrait également provenir d'un autre appareil vidéo, tel qu'un enregistreur vidéo pré-programmé qui indique au décodeur numérique le programme à recevoir par ce dernier afin d'être enregistré dans l'enregistreur.

Le microprocesseur CPU traduit ensuite l'information de programme PRG en une information de fréquence FREQ au moyen d'une table de correspondance stockée dans une mémoire (non représentée) associée au microprocesseur CPU.

L'information de fréquence FREQ est alors envoyée au syntoniseur TUN2 de la seconde chaîne de décodage CHN2. Le syntoniseur TUN2 va rechercher un signal à la fréquence indiquée par l'information de fréquence FREQ, ce qui n'est pas nécessairement immédiat.

Une fois que le syntoniseur TUN2 reçoit correctement le signal désiré (*i*.*e*. lorsque que le syntoniseur TUN2 a accroché), le signal vidéo reçu est transmis à travers les autres éléments de la seconde chaîne de décodage CHN2, à savoir le démodulateur DMD2, le démultiplexeur DMPX2 et le décodeur audio/vidéo DEC2. Chaque élément, et de façon notable le décodeur audio/vidéo DEC2, ne génère des signaux valides en sortie qu'après une certain laps de temps par rapport à la réception des signaux en entrée.

Selon une variante possible, un désembrouilleur est introduit dans chaque chaîne de décodage entre le démultiplexeur et le décodeur audio/vidéo. La mise en oeuvre du désembrouilleur nécessite également un certain laps de temps puisqu'il est nécessaire de récupérer les clefs cryptées dans le flux puis d'effectuer un calcul numérique pour pouvoir désembrouiller les flux audio et vidéo.

Il est important de remarquer que, tant que le décodeur audio/vidéo DEC2 ne génère pas un flux numérique valide en sortie et qu'ainsi l'information d'état RDY indique que le décodeur audio/vidéo DEC2 n'est pas prêt, la commande du microprocesseur CPU au commutateur SW est maintenue (telle qu'elle était avant la phase de changement de programme) : le commutateur SW connecte la première chaîne de décodage CHN1 au convertisseur audio DAC et à l'encodeur vidéo ENC.

Pendant tout le début de la phase de changement de programme, tant que le décodeur audio/vidéo DEC2 de la seconde chaîne CHN2 n'est pas prêt, le décodeur numérique continue donc à générer sur ses sorties vidéo VID et audio AUD des signaux analogiques correspondant au programme reçu par la première chaîne de décodage CHN1.

Lorsque le décodeur audio/vidéo DEC2 de la deuxième chaîne de décodage CHN2 génère un flux numérique valide en sortie, l'information d'état RDY indique que le décodeur audio/vidéo DEC2 est prêt. Quand le microprocesseur CPU reçoit cette information d'état RDY "prêt", il modifie sa commande CTL au commutateur SW afin que celui-ci connecte la seconde chaîne de décodage CHN2 (et précisément la sortie de son décodeur audio/vidéo DEC2) au convertisseur audio DAC et à l'encodeur vidéo ENC.

A partir de ce moment, le décodeur numérique génère donc sur ses sorties audio AUD et vidéo VID des signaux analogiques qui correspondent au programme reçu par la second chaîne de décodage CHN2.

Le changement de programme est donc effectué.

Le prochain changement de programme pourra bien sûr être effectué de manière similaire au changement de programme décrit ci-dessus en inversant le rôle de la première et de la seconde chaîne de décodage.

L'invention n'est bien sûr pas limitée à l'exemple décrit ci-dessus.

Par ailleurs, pour alléger les figures, les connexions entre les différents éléments sont représentés par un trait simple même lorsqu'il s'agit dans la pratique de plusieurs connexions parallèles (bus).

## Revendications

1. Dispositif de réception de signaux vidéo comprenant :
- une première chaîne de décodage (CHN1);
- une seconde chaîne de décodage (CHN2) ;
- un encodeur vidéo (ENC) ;
- un moyen de sélection (SW) pour connecter sélectivement la première chaîne de décodage (CHN1) ou la deuxième chaîne de décodage (CHN2) à l'encodeur vidéo (ENC) ;
- un moyen de détection (CPU) de l'état d'au moins une des première et seconde chaînes de décodage (CHN1, CHN2) générant une information d'état (RDY) ;
- un moyen de commande (CPU, CTL) du moyen de sélection (SW) en fonction de l'information d'état (RDY).

2. Dispositif selon la revendication 1, comprenant une interface utilisateur (UI) apte à transmettre une information de programme (PRG) au moyen de commande (CPU).

3. Dispositif selon l'une des revendications 1 à 2, dans lequel la première et la seconde chaîne de décodage (CHN1, CHN2) sont aptes à générer chacune un flux vidéo numérique.

4. Dispositif selon l'une des revendications 1 à 2, dans lequel la première et la seconde chaîne de décodage (CHN1, CHN2) comprennent chacune un décodeur vidéo (DEC1, DEC2).

5. Dispositif salon l'une des revendications précédentes, dons lequel au moins une des première et seconde chaînes de décodage (CHN1, CHN2) comporte un désembrouilleur.

6. Procédé de commande d'un dispositif de réception de signaux vidéo comprenant:
- une première chaîne de décodage (CHN1) ;
- une seconde chaîne de décodage (CHN2) ;
- un encodeur vidéo (ENC) ;
- un moyen de sélection (SW) pour connecter sélectivement la première chaîne de décodage (CHN1) ou la deuxième chaîne de décodage (CHN2) à l'encodeur vidéo (ENC) ;
le procédé comprenant les étapes suivantes :
- commande du moyen de sélection (SW) pour connexion de la première chaîne de décodage (CHN1) à l'encodeur vidéo (ENC) ;
- réception d'un signal comportant une information de programme (PRG) ;
- commande de la seconde chaîne de décodage (CHN2) pour réception du programme désigné par l'information de programme (PRG) ;
- maintien de la commande du moyen de sélection (SW) pour connexion de la première chaîne de décodage (CHN1) à l'encodeur vidéo (ENC) tant que la seconde chaîne de décodage (CHN2) ne génère aucun flux vidéo ;
- commande du moyen de sélection (SW) pour connexion de la seconde chaîne de décodage (CHN2) à l'encodeur vidéo (ENC) lorsque la seconde chaîne de décodage (CHN2) génère un flux vidéo.

7. Procédé de commande d'un dispositif selon la revendication 1, comprenant les étapes suivantes :
- commande du moyen de sélection (SW) pour connexion de la première chaîne de décodage (CHN1) à l'encodeur vidéo (ENC) ;
- réception d'un signal comportant une information de programme (PRG) ;
- commande de la seconde chaîne de décodage (CHN2) pour réception du programme désigné par l'information de programme (PRG) ;
- maintien de la commande du moyen de sélection (SW) pour connexion de la première chaîne de décodage (CHN1) à l'encodeur vidéo (ENC) tant que l'information d'état (RDY) du moyen de détection (CPU) indique que la seconde chaîne de décodage (CHN2) ne génère aucun flux vidéo ;
- commande du moyen de sélection (SW) pour connexion de la seconde chaîne de décodage (CHN2) à l'encodeur vidéo (ENC) lorsque l'information d'état (RDY) du moyen de détection (CPU) indique que la seconde chaîne de décodage (CHN2) génère un flux vidéo.

8. Procédé de commande d'un dispositif selon la revendication 2, comprenant les étapes suivantes :
- commande du moyen de sélection (SW) pour connexion de la première chaîne de décodage (CHN1) à l'encodeur vidéo (ENC) ;
- réception de l'information de programme (PRG) de l'interface utilisateur (UI) ;
- commande de la seconde chaîne de décodage (CHN2) pour réception du programme désigné par l'information de programme (PRG) ;
- maintien de la commande du moyen de sélection (SW) pour connexion de la première chaîne de décodage (CHN1) à l'encodeur vidéo (ENC) tant que l'information d'état (RDY) du moyen de détection (CPU) indique que la seconde chaîne de décodage (CHN2) ne génère aucun flux vidéo ;
- commande du moyen de sélection (SW) pour connexion de la seconde chaîne de décodage (CHN2) à l'encodeur vidéo (ENC) lorsque l'information d'état (RDY) du moyen de détection (CPU) indique que la seconde chaîne de décodage (CHN2) génère un flux vidéo.

## Patentansprüche

1. Empfangsvorrichtung für Videosignale, die aufweist:
- einen ersten Decoderkanal (CHN1);
- einen zweiten Decoderkanal (CHN2);
- einen Videocodierer (ENC);
- ein Auswahlmittel (SW) zur selektiven Verbindung des ersten Decoderkanals (CHN1) oder des zweiten Decoderkanals (CHN2) mit dem Videocodierer (ENC);
- ein Mittel (CPU) zur Erfassung des Zustands mindestens eines der ersten und zweiten Decoderkanäle (CHN1, CHN2), das eine Zustandsinformation (RDY) erzeugt;
- ein Mittel (CPU, CTL) zur Steuerung des Auswahlmittels (SW) in Abhängigkeit von der Zustandsinformation (RDY).

2. Vorrichtung nach Anspruch 1, die eine Benutzerschnittstelle (UI) aufweist, die zur Übertragung einer Programminformation (PRG) zum Steuermittel (CPU) geeignet ist.

3. Vorrichtung nach einem der Ansprüche 1 bis 2, bei der der erste und der zweite Decoderkanal (CHN1, CHN2) geeignet ist, je einen digitalen Videostrom zu erzeugen.

4. Vorrichtung nach einem der Ansprüche 1 bis 2, bei der der erste und der zweite Decoderkanal (CHN1, CHN2) je einen Videodecoder (DEC1, DEC2) umfassen.

5. Vorrichtung nach einem der vorhergehenden Ansprüche, bei der mindestens einer der ersten und zweiten Decoderkanäle (CHN1, CHN2) einen Descrambler aufweist.

6. Verfahren zur Steuerung einer Vorrichtung zum Empfang von Videosignalen, die aufweist:
- einen ersten Decoderkanal (CHN1);
- einen zweiten Decoderkanal (CHN2);
- einen Videocodierer (ENC);
- ein Auswahlmittel (SW) zur selektiven Verbindung des ersten Decoderkanals (CHN1) oder des zweiten Decoderkanals (CHN2) mit dem Videocodierer (ENC);
wobei das Verfahren die folgenden Schritte aufweist:
- Steuerung des Auswahlmittels (SW) zur Verbindung des ersten Decoderkanals (CHN1) mit dem Videocodierer (ENC);
- Empfang eines eine Programminformation (PRG) enthaltenden Signals;
- Steuerung des zweiten Decoderkanals (CHN2) zum Empfang des durch die Programminformation (PRG) bezeichneten Programms;
- Aufrechterhaltung der Steuerung des Auswahlmittels (SW) zur Verbindung des ersten Decoderkanals (CHN1) mit dem Videocodierer (ENC), solange der zweite Decoderkanal (CHN2) keinen Videostrom erzeugt;
- Steuerung des Auswahlmittels (SW) zur Verbindung des zweiten Decoderkanals (CHN2) mit dem Videocodierer (ENC), wenn der zweite Decoderkanal (CHN2) einen Videostrom erzeugt.

7. Verfahren zur Steuerung einer Vorrichtung nach Anspruch 1, das die folgenden Schritte aufweist:
- Steuerung des Auswahlmittels (SW) zur Verbindung des ersten Decoderkanals (CHN1) mit dem Videocodierer (ENC);
- Empfang eines eine Programminformation (PRG) enthaltenden Signals;
- Steuerung des zweiten Decoderkanals (CHN2) zum Empfang des durch die Programminformation (PRG) bezeichneten Programms;
- Aufrechterhaltung der Steuerung des Auswahlmittels (SW) zur Verbindung des ersten Decoderkanals (CHN1) mit dem Videocodierer (ENC), solange die Zustandsinformation (RDY) des Erfassungsmittels (CPU) angibt, dass der zweite Decoderkanal (CHN2) keinen Videostrom erzeugt;
- Steuerung des Auswahlmittels (SW) zur Verbindung des zweiten Decoderkanals (CHN2) mit dem Videocodierer (ENC), wenn die Zustandsinformation (RDY) des Erfassungsmittels (CPU) angibt, dass der zweite Decoderkanal (CHN2) einen Videostrom erzeugt.

8. Verfahren zur Steuerung einer Vorrichtung nach Anspruch 2, das die folgenden Schritte aufweist:
- Steuerung des Auswahlmittels (SW) zur Verbindung des ersten Decoderkanals (CHN1) mit dem Videocodierer (ENC);
- Empfang der Programminformation (PRG) von der Benutzerschnittstelle (UI);
- Steuerung des zweiten Decoderkanals (CHN2) zum Empfang des Programms, das von der Programminformation (PRG) bezeichnet wird;
- Aufrechterhaltung der Steuerung des Auswahlmittels (SW) zur Verbindung des ersten Decoderkanals (CHN1) mit dem Videocodierer (ENC), solange die Zustandsinformation (RDY) des Erfassungsmittels (CPU) anzeigt, dass der zweite Decoderkanal (CHN2) keinen Videostrom erzeugt;
- Steuerung des Auswahlmittels ((SW) zur Verbindung des zweiten Decoderkanals (CHN2) mit dem Videocodierer (ENC), wenn die Zustandsinformation (RDY) des Erfassungsmittels (CPU) anzeigt, dass der zweite Decoderkanal (CHN2) einen Videostrom erzeugt.

## Claims

1. A device for receiving video signals comprising:
- a first decoding chain (CHN1);
- a second decoding chain (CHN2);
- a video encoder (ENC);
- a means of selection (SW) for selectively connecting the first decoding chain (CHN1) or the second decoding chain (CHN2) to the video encoder (ENC),
- a means of detection (CPU) of the state of at least one of the first and second decoding chains (CHN1, CHN2) generating a state cue (RDY);
- a means of control (CPU, CTL) of the means of selection (SW) as a function of the state cue (RDY).

2. Device as claimed in claim 1, comprising a user interface (UI) able to transmit a program cue (PRG) to the means of control (CPU).

3. Device according to one of claims 1 to 2, in which the first and the second decoding chain (CHN1, CHN2) are able to each generate a digital video stream.

4. Device according to one of claims 1 to 2, in which the first and the second decoding chain (CHN1, CHN2) each comprise a video decoder (DEC1, DEC2).

5. Device as claimed in anyone of the preceding claims, in which at least one of the first and second decoding chains (CHN1, CHN2) comprises a descrambler.

6. A method of controlling a device for receiving video signals, comprising:
- a first decoding chain (CHN1),
- a second decoding chain (CHN2),
- a video encoder (ENC),
- a means for selection (SW) for selectively connecting the first decoding chain (CHN1) or the second decoding chain (CHN2) to the video encoder (ENC), said method comprising the following steps:
- command of the means of selection (SW) for connection of the first decoding chain (CHN1) to the video encoder (ENC);
- reception of a signal comprising a program cue (PRG);
- command of the second decoding chain (CHN2) for reception of the program designated by the program cue (PRG);
- maintenance of the command of the means of selection (SW) for connection of the first decoding chain (CHN1) to the video encoder (ENC) as long as the second decoding chain (CHN2) is generating no video stream;
- control of the means of selection (SW) for connection of the second decoding chain (CHN2) to the video encoder (ENC) when the second decoding chain (CHN2) is generating a video stream.

7. Method of controlling a device as claimed in claim 1, comprising the following steps:
- command of the means of selection (SW) for connection of the first decoding chain (CHN1) to the video encoder (ENC);
- reception of a signal comprising a program cue (PRG);
- command of the second decoding chain (CHN2) for reception of the program designated by the program cue (PRG);
- maintenance of the command of the means of selection (SW) for connection of the first decoding chain (CHN1) to the video encoder (ENC) as long as the state cue (RDY) of the means of detection (CPU) indicates that the second decoding chain (CHN2) is generating no video stream;
- control of the means of selection (SW) for connection of the second decoding chain (CHN2) to the video encoder (ENC) when the state cue (RDY) of the means of detection (CPU) indicates that the second decoding chain (CHN2) is generating a video stream.

8. Method of controlling a device as claimed in claim 2, comprising the following steps:
- command of the means of selection (SW) for connection of the first decoding chain (CHN1) to the video encoder (ENC);
- reception of a program cue (PRG) from the user interface;
- command of the second decoding chain (CHN2) for reception of the program designated by the program cue (PRG);
- maintenance of the command of the means of selection (SW) for connection of the first decoding chain (CHN1) to the video encoder (ENC) as long as the state cue (RDY) of the means of detection (CPU) indicates that the second decoding chain (CHN2) is generating no video stream;
- control of the means of selection (SW) for connection of the second decoding chain (CHN2) to the video encoder (ENC) when the state cue (RDY) of the means of detection (CPU) indicates that the second decoding chain (CHN2) is generating a video stream.
